# EUROPEAN PATENT APPLICATION

(11) **EP 2 184 529 A2**
(43) Date of publication of application: **12.05.2010**
(21) Application number: 09252567.4
(22) Date of filing: 06.11.2009
(51) Int. Cl.: F17D 3/14

(54) **Retrofit apparatus and method for gas line moisture detection and removal**

(30) Priority: 06.11.2008 US 111902 P
(71) Applicant: Telematics Wireless Ltd., 58117 Holon (IL)
(72) Inventor: Kafri, Eddy, Hod Hasharon (IL)
(74) Representative: White, Duncan Rohan

(57) **Abstract**

A method for retrofitting an existing natural gas line drainage point 100 with a moisture detection capability includes inserting a conducting rod 110 in a previously installed drainage pipe 40 in the drainage point 100, where a lower extremity of the rod 110 may be covered with an insulating material 120, exposing a section of the rod 110 above the insulating material 120, where a lowest point of the section indicates a minimum level of moisture in the drainage point 100 for which status reporting is required, attaching a diagnostic unit 150 to both the drainage pipe 40 and the conducting rod 110 via electric leads 140, the unit including means to provide electric current and diagnose at least one of an electric short and an abrupt change in conductivity, and attaching means for transmitting 160 an indication regarding a status for the drainage point.

## Description

### CROSS-REFERENCE TO RELATED APPLICATIONS

This application claims benefit from U.S. Provisional Patent Application No. 61/111,902, filed November 6, 2008, which is hereby incorporated in its entirety by reference.

### FIELD OF THE INVENTION

The present invention relates to the removal of moisture from condensation in natural gas lines generally, and to retrofitting existing facilities in particular.

### BACKGROUND OF THE INVENTION

Natural gas is typically provided to end consumers via a network of pipes. For esthetic and security reasons these networks are typically buried underground. As unwanted moisture is typically mixed in with natural gas, a means to trap and drain this moisture is typically included in such networks.

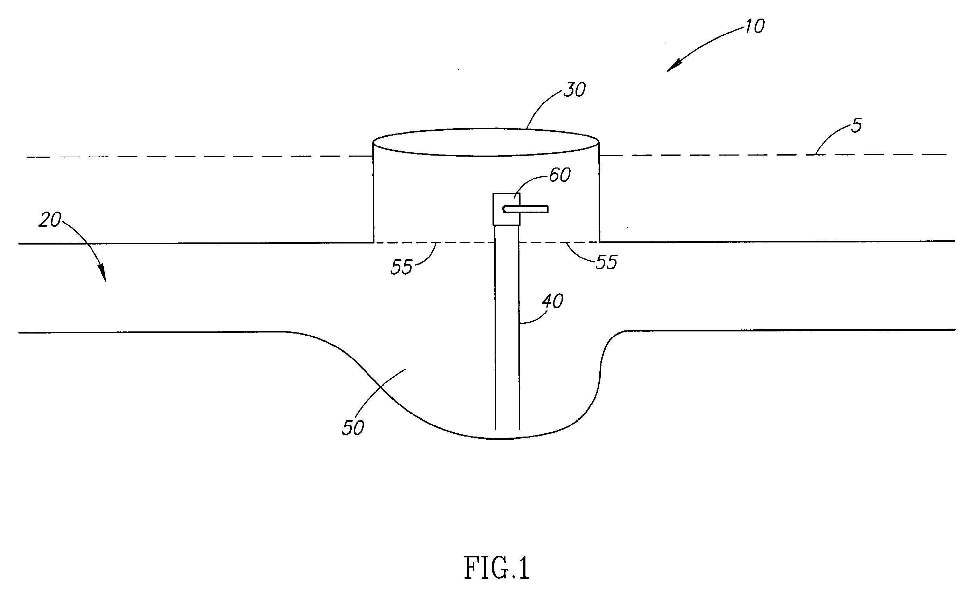

Reference is now made to Fig. 1 which illustrates a typical drainage point 10 for a gas line 20. Drainage point 10 comprises a manhole cover 30, a drainage pipe 40, and a collection trough 50. Drainage pipe 40 is typically fixed in place with extending through a gas proof seal 55 and comprises a valve 60 for opening and closing pipe 40 to provide external access to gas line 20. A typical drainage point 10 may extend to a depth of two or more meters from a surface 5. A drainage point 10 is typically designed in such a manner that moisture from condensation will tend to pool in collection trough 50.

Moisture is typically drained from collection troughs 50 on regular basis by work crews. A work crew will typically remove manhole cover 30 to access drainage pipe 40. They will then affix a suction hose (not shown) to pipe 40 and open valve 60. Moisture in collection trough 20 is then removed by suction and stored in a mobile tank. Valve 60 is then closed, the suction hose removed and manhole cover 30 replaced.

Drainage points 10 do not typically comprise means to indicate whether or not moisture has indeed collected in collection trough 50. Accordingly, it is not unusual for a drainage point 10 to be serviced even though there is relatively little moisture collected in trough 50. Conversely, it is also possible that a collection trough 50 may fill faster than expected and that the quality of the gas flowing through gas line 20 may be adversely affected before a drainage point 10 is serviced.

A large city may have thousands of such drainage points 10 to service on a regular basis.

### SUMMARY OF THE PRESENT INVENTION

In accordance with a preferred embodiment of the present invention, there is provided a utility line drainage point including a drainage pipe positioned inside a utility line, where the pipe is constructed of a conductive material and descends into a water collection trough, a conducting rod positioned inside of the drainage pipe, where a top portion of the rod is exposed above the pipe and a lower portion of the rod extends below the pipe, the lower portion being covered with an insulating material, a source of electric current attached to both the top portion and the drainage pipe, an electric short detector to detect an electric short that occurs when a level of water in the collection trough rises above the lower portion and comes in contact with both an exposed area of the conducting rod and the drainage pipe, and means to indicate a status for the drainage point.

Further, in accordance with a preferred embodiment of the present invention, the drainage pipe is from an original drainage point installation, and the conducting rod, the source, the detector and the means are retrofitted components of the drainage point.

Still further, in accordance with a preferred embodiment of the present invention, the means to indicate comprise at least a wireless transmitter.

Additionally, in accordance with a preferred embodiment of the present invention, the status is at least one of "service required" and "functioning properly".

Moreover, in accordance with a preferred embodiment of the present invention, the status is based on information provided by the electric short detector.

Further, in accordance with a preferred embodiment of the present invention, the utility line drainage point also includes sensors for at least one of pressure, gas contamination, and residue, where the means to indicate may also be configurable to transmit data from the sensors.

Still further, in accordance with a preferred embodiment of the present invention, the utility line is a natural gas line.

There is also provided, in accordance with a preferred embodiment of the present invention, a method for retrofitting an existing natural gas line drainage point with a moisture detection capability including inserting a conducting rod in a previously installed drainage pipe in the drainage point, where a lower extremity of the rod may be covered with an insulating material, exposing a section of the rod above the insulating material, where a lowest point of the section indicates a minimum level of moisture in the drainage point for which status reporting is required, attaching a diagnostic unit to both the drainage pipe and the conducting rod via electric leads, the unit including means to provide electric current and diagnose at least one of an electric short and an abrupt change in conductivity, and attaching means for transmitting an indication regarding a status for the drainage point.

Further, in accordance with a preferred embodiment of the present invention, the method also includes a configuration option for the diagnostic unit to use the means for transmitting to transmit the indication when at least one of an electric short and abrupt change in conductivity is diagnosed.

Still further, in accordance with a preferred embodiment of the present invention, the means for transmitting comprise at least a wireless transmitter.

Additionally, in accordance with a preferred embodiment of the present invention, the method also includes the means to periodically transmit a signal to indicate that they are functioning properly.

There is also provided, in accordance with a preferred embodiment of the present invention, a data collection method including receiving on a moving vehicle, operational data transmitted from utility data points, where the vehicle is driving along a set route determined for purposes unrelated to data collection, and providing access to the received data for further processing related to a function of a utility associated with the utility data point.

Further, in accordance with a preferred embodiment of the present invention, the set route is a garbage collection route.

Still further, in accordance with a preferred embodiment of the present invention, the utility data points transmit the operational data regarding at least one of electricity, water, telephone, sewage and wastewater.

There is also provided, in accordance with a preferred embodiment of the present invention, a data collection system implementable on a computing device, the system including a vehicle to drive along a set route, the route determined for purposes unrelated to data collection, and a data receiver installed on the vehicle to receive operational data transmitted from utility data points while the vehicle is driven along the set route, where the vehicle is driving along a set route determined for purposes unrelated to data collection and operation of the data receiver is independent of an activity for which the route is determined.

Further, in accordance with a preferred embodiment of the present invention, the route is a garbage collection route.

Still further, in accordance with a preferred embodiment of the present invention, the utility data points are associated with at least one of electricity, water, telephone, sewage and wastewater.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is schematic illustration of a typical prior art drainage point for a gas line;

Fig. 2 is a schematic illustration of a novel retrofitted monitored drainage point, constructed and operative in accordance with a preferred embodiment of the present invention;

Fig. 3A is a schematic illustration of a more detailed version of the top section of the drainage pipe represented in Fig. 1;

Fig. 3B is a schematic illustration of a retrofitted version of the section of drainage pipe in Fig. 3A, constructed and operative in accordance with a preferred embodiment of the present invention;

Fig. 4 is a block diagram of a novel process to convert the drainage point of Fig. 1 to the drainage point of Fig. 2; and

Figs. 5A - 5I are schematic illustrations of various parts of the drainage point of Fig. 2 as it is assembled.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Servicing drainage points 10 per a regular schedule without input regarding the current level of moisture in collection troughs 50 may be inefficient. Some drainage points 10 may be serviced even when though their current level of moisture may not require servicing at all. Conversely, some drainage points 10 may be serviced too infrequently, and the quality of natural gas passing through them may suffer as a result.

A possible solution may be to reconstruct drainage points 10 to include moisture monitoring capabilities in order to provide current information regarding the need to drain moisture from collection troughs 50. Unfortunately, such a solution may only be relevant for the installation of new gas line networks. It may no be cost/effective to entirely reconstruct or replace existing infrastructure where a network already exists.

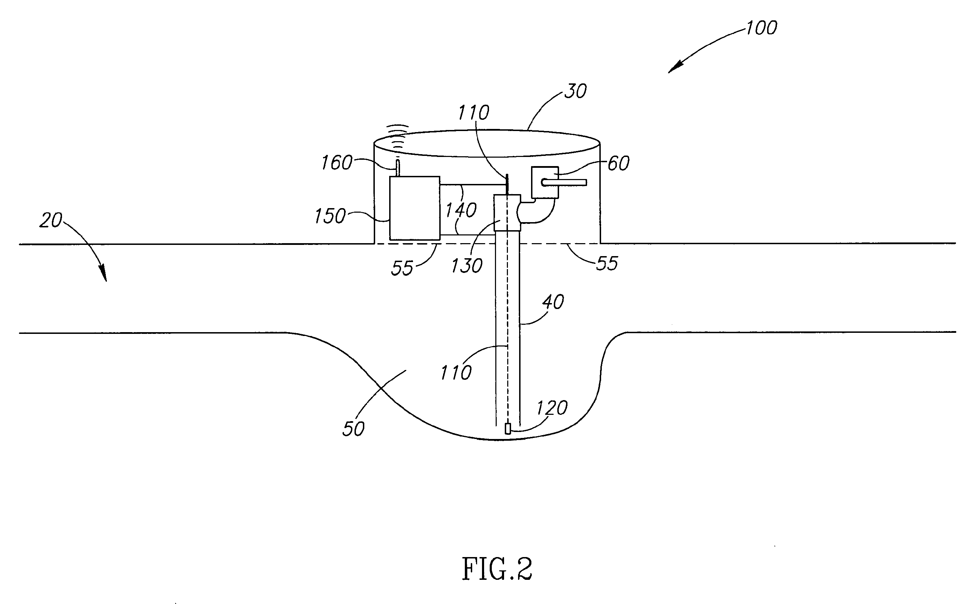

Applicants have realized that a simple cost/effective solution may be implemented on top of an existing infrastructure of prior art drainage points 10. Reference is now made to Fig. 2 which shows a novel retrofitted monitored drainage point 100, constructed and operative in accordance with a preferred embodiment of the present invention.

Drainage point 100 may comprise existing infrastructure from the prior art, such as manhole cover 30, drainage pipe 40, collection trough 50, gas line seal 55 and valve 60. However, drainage point 100 may also comprise conducting rod 110, insulating spacer 120, T pipe 130 and diagnostic unit 150. Diagnostic unit 150 may be connected to conducting rod 110 and drainage pipe 40 via electric leads 140. Unit 150 may comprise an antenna 160 for transmission to a remote receiver (not shown).

The position of valve 60 may be different than in the prior art. Instead of valve 60, a T pipe 130 may placed at the end of drainage pipe 40, and valve 60 reattached to T pipe 130. It will be appreciated that an original valve 60 from the prior art may be used for the present invention without necessitating the replacement of the original part.

Conducting rod 110 may be threaded into drainage pipe 40 such that insulating spacer may be located near, or in contact with, the bottom of trough 50. Insulating spacer 120 may be made of a non conducting material such as plastic. Accordingly, spacer 120 may insulate between any water or other moisture in trough 50 and conducting rod 110.

Electric leads 140 may connect diagnostic unit 150 to both conducting rod 110 and drainage pipe 40. Diagnostic unit 150 may comprise means to pass an electric current through leads 140. Unit 150 may also comprise means to detect an electric short or an abrupt change in conductivity through leads 140. It will be appreciated that conducting rod 110 and drainage pipe may not touch one another. Accordingly, an electric current passed through leads 140 may not normally cause an electric short. However, if the level of water in collection trough 50 rises past insulating spacer 120, the water may conduct electricity between conducting rod 110 and drainage pipe 40, thus causing an electric short or an abrupt change in conductivity.

It will therefore be appreciated that by detecting an electric short or an abrupt change in conductivity, diagnostic unit 150 may receive an indication that the level of water in collection trough 50 may have reached or exceeded a point at which drainage point 100 should be drained. At such a time, diagnostic unit 150 may transmit an indication of the need for service to a remote transmitter via antenna 160.

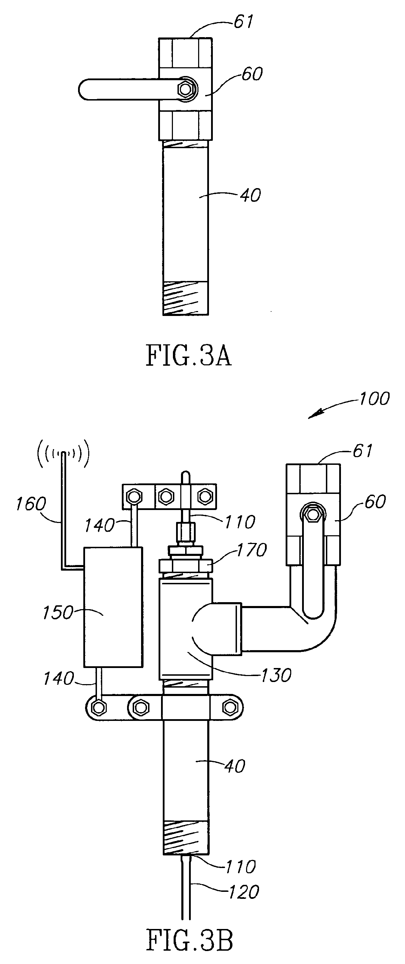

Figs. 3A and 3B, to which reference is now made, may together illustrate the modifications that may be made to the prior art in order to implement drainage point 100. Fig 3A shows the top section of a prior art drainage pipe 40 with a valve 60 screwed in and positioned at the top. When servicing a drainage point 10, valve 60 may be opened in order to enable a suction pipe to be attached to top aperture 61.

Fig. 3B shows the modifications required to turn drainage point 10 into drainage point 100. T pipe 130 may now separate between drainage pipe 40 and valve 60. Conducting rod 110 may be threaded through pipe 40 with insulating spacer 120 attached at its end. Leads 40 may connect between unit 150, rod 110 and pipe 40.

It will be appreciated that conducting rod 110 may be made of the same material as drainage pipe 40. In such manner, it may be assumed that they may corrode at a similar rate and metal pairing effects may be reduced to a minimum. Therefore they may be expected to be replaced at the same time in order to save on the eventual cost and effort of replacement.

Unit 150 may use antenna 160 to transmit an indication that water should be drained from point 100 as necessary. It will also be appreciated that the actual servicing of drainage point 100 may be generally the same as with the prior art. Valve 60 may be opened to enable a suction hose to be attached to aperture 61 and the water may be drained from collection trough 50.

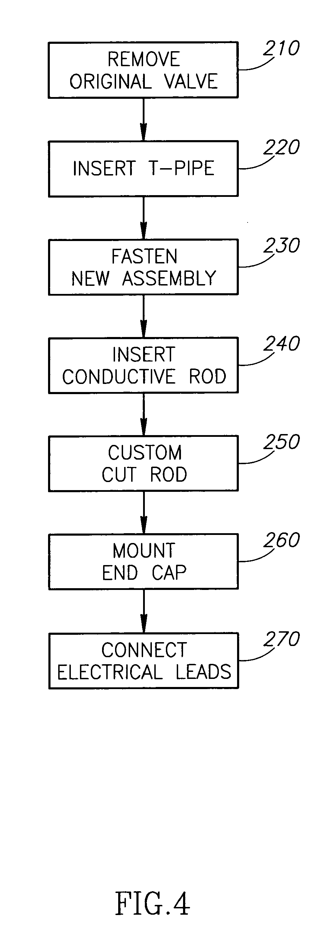

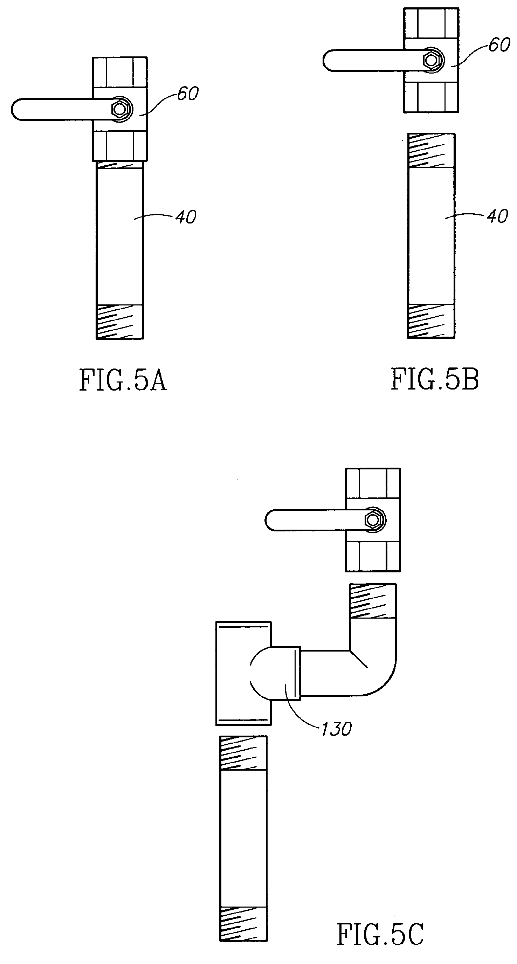

Fig. 4, to which reference is now made, shows a block diagram of the steps that may be necessary to convert a drainage point 10 to a drainage point 100. Figs. 5A - 5I, to which reference is now also made, show various representations of parts of an exemplary drainage point 100 as they are assembled.

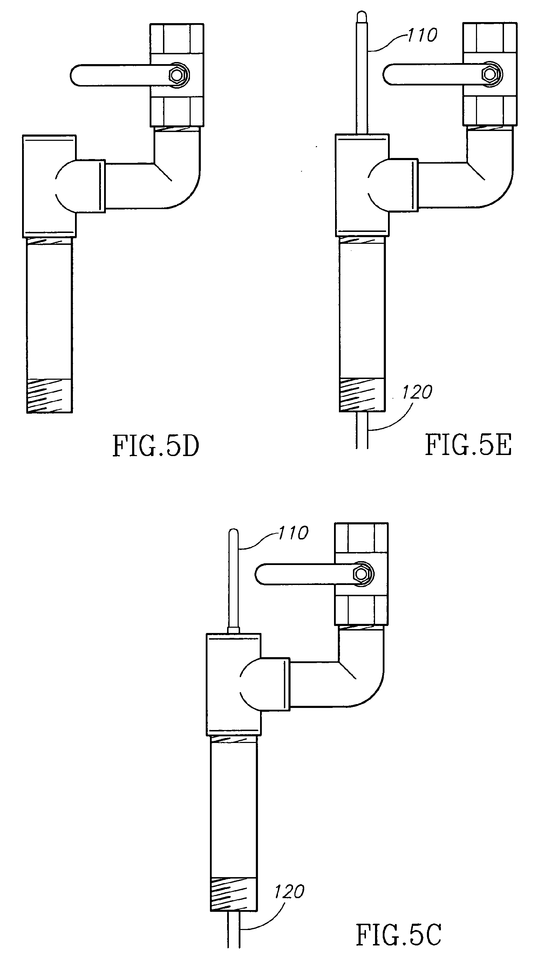

Fig. 5A shows an exemplary drainage pipe 40 and attached valve 60 as they may appear in an exemplary drainage point 10. As shown in Fig. 5B, valve 60 may be removed (step 210) from pipe 40, in order that a T pipe 130 may be inserted (step 220) between them as shown in Fig. 5C. These three parts may then be fastened (step 230) to each other as shown in Fig. 5D.

A conducting rod 110 may then be inserted (step 240) into drainage pipe 40 as shown in Fig 5E. It will be appreciated that the lower portion of rod 110 may be covered with an insulating material in order to form spacer 120. It will also be appreciated that drainage points 10 in a given network may not have a uniform depth. Accordingly, as shown in Fig. 5F, conducting rod 110 may be custom cut (step 250) on location to correspond to the dimensions of a given existing drainage point 10. At the same time the insulating material covering rod 110 may also be trimmed to provide conducting surfaces at the top and at a desired water detection line (not shown).

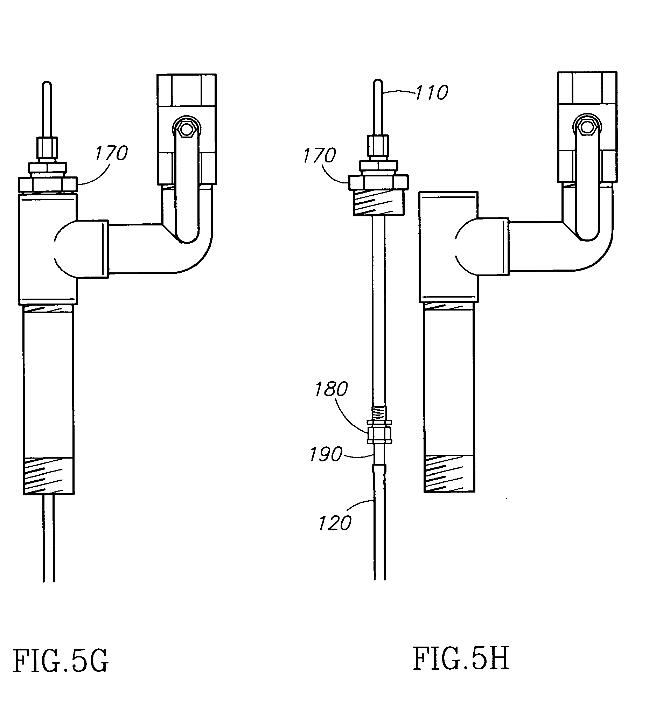

As shown in Fig. 5G, an end cap 170 may be mounted (step 260) to close drainage pipe 40 and hold rod 110 in place inside pipe 40. For illustrative purposes, Fig. 5H shows conducting rod 110 outside of drainage pipe 40. Rod 110 may comprise a top area of exposed conductive material, an end cap 170, an internal spacer 180, exposed area 190, and insulating spacer 120. As discussed hereinabove, conducting rod 110 may preferably be constructed of the same material as pipe 40. End cap 170 may fix rod 110 in place when placed inside pipe 40. Internal spacer 180 may be formed of a non conductive material such as plastic and may extend to a greater width than the rest of rod 110, thus preventing rod 110 from excessive movement within pipe 40. Accordingly, exposed area 190 may not come in physical contact with a side of pipe 40.

It will be appreciated that the location of exposed area 190 may determine a threshold depth for water that should be drained from collection trough 50. Water touching insulating spacer 120 may not cause a short when drainage point 100 may be in operation. However, once the water level may reach exposed area 190, the water may complete a circuit between conducting rod 110 and pipe 40, thus causing an electrical short.

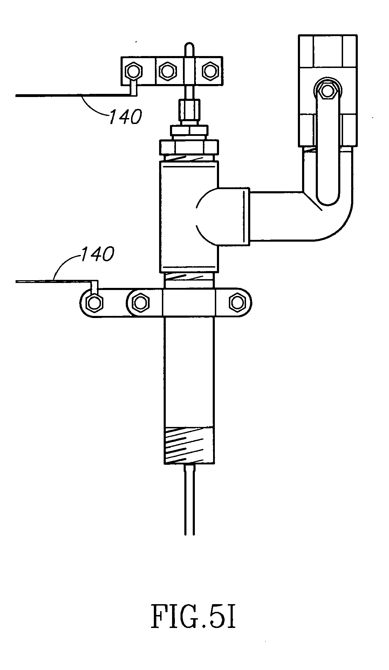

As shown in Fig. 5I, electrical leads 140 may then be connected (step 270) to conducting rod 110 and drainage pipe 40. As discussed hereinabove, leads 140 may be connected (step 280) to diagnostic unit 150 (Fig. 2) to complete the conversion of drainage point 10 to drainage point 100.

It will be appreciated that during operation of drainage point 100, water rising in collection trough 50 to the level of exposed area will cause an electric short, which may in turn trigger diagnostic unit 150 to transmit a signal to a remote receiver that may indicate that service may be required for drainage point 100.

It will also be appreciated that there may be a limit to how long a drainage point 10 may be open before escaping natural gas may pose a health risk to service crew and passersby. Accordingly, it will be appreciated that the time required for a service crew to convert the prior art to drainage point 100 may be five to ten minutes.

The signal from unit 150 may be relatively weak and may require a service crewman to periodically check each drainage point 100 by walking nearby with a receiver in order to receive signals as they are transmitted. In accordance with an alternative preferred embodiment of the present invention, an external display screen on the surface side of drainage point 100 may be attached to unit 150. In such an embodiment, a crewman may check the status of a drainage point 100 by reading from the display without having to open manhole cover 30.

In accordance with another alternative preferred embodiment of the present invention, the display may not be attached directly to unit 150, but instead may receive signals via antenna 160. In accordance with another alternative preferred embodiment of the present invention, the display may be located inside drainage point 100 under manhole cover 30. In accordance with yet another alternative preferred embodiment of the present invention, diagnostic unit 150 may use antenna 160 to transmit a request for servicing either directly or via relay to a communications network for further processing. It will be appreciated that transmissions via antenna 160 may comprise an indication of the location of the drainage point requiring servicing.

It will be appreciated that in accordance with all of the above alternative preferred embodiments, the status of a given drainage point may be determined prior to actually attempting to drain it. It will further be appreciated, that the structural integrity of an original drainage point 10 may not be impacted by the act of conversion to a drainage point 100. Original gas line seal 55 may be left intact throughout the conversion process. All the necessary modifications may be performed on the portion of drainage pipe 40 visible above gas line seal, or via drainage pipe 40 itself. Furthermore, manhole cover 30 may not require any modification, further limiting the exposure to potential structural damage during the process. Accordingly, the risk of incurring a gas leak may be minimal, and the cost of conversion in terms of time and expense may be significantly lower than other alternatives.

In accordance with a preferred embodiment of the present invention, service crew may not have to proactively check individual drainage points 100 to identify drainage points 100 requiring servicing. Instead, receivers may be installed on vehicles with known static routes that may cover a target grid as part of the routine performance of other, seemingly unrelated tasks. For example, municipalities tend to have fleets of garbage trucks that have set routes that are followed according to a set generally rigid schedule. Receivers may be attached to such trucks to receive transmissions from antennas 160 as the trucks are driven along their regular route. On a periodic basis, for example at the end of a route, at the end of a day or during travel in real time, transmissions received by the receivers may be downloaded and analyzed in order to determine which drainage points 100 may require servicing.

The method detailed hereinabove may entail the periodic and routine collection of service requests transmitted from gas line drainage points by receivers on vehicles driving set routes as per a set schedule for purposes unrelated per se to data collection. It will be appreciated that such a method may be applied to a variety of other scenarios as well. For example, in addition to service requests, other information may also be added to such transmissions. Such other information may include, for example, an "OK" signal indicating that antenna 60 may still be functioning properly, or information from other sensors installed in drainage point 100. Such sensors may include, for example, pressure sensors, and detectors for specific levels of contamination in gas mixture and/or residue.

Furthermore, such transmissions may be used to report information regarding the status of data points for other utilities with similarly wide distribution such as electricity, water, telephone, and sewage and wastewater. It will also be appreciated that such transmissions may also originate from any relevant utility data point such as usage meters, and that the transmitted information may be any relevant operational data, either current or historical.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A utility line drainage point comprising:
a drainage pipe positioned inside a utility line, wherein said pipe is constructed of a conductive material and descends into a water collection trough;
a conducting rod positioned inside of said drainage pipe, wherein a top portion of said rod is exposed above said pipe and a lower portion of said rod extends below said pipe, said lower portion being covered with an insulating material;
a source of electric current attached to both said top portion and said drainage pipe;
an electric short detector to detect an electric short that occurs when a level of water in said collection trough rises above said lower portion and comes in contact with both an exposed area of said conducting rod and said drainage pipe; and
means to indicate a status for said drainage point.

2. A method for retrofitting an existing natural gas line drainage point with a moisture detection capability comprising:
inserting a conducting rod in a previously installed drainage pipe in said drainage point, wherein a lower extremity of said rod may be covered with an insulating material;
exposing a section of said rod above said insulating material, wherein a lowest point of said section indicates a minimum level of moisture in said drainage point for which status reporting is required ;
attaching a diagnostic unit to both said drainage pipe and said conducting rod via electric leads, said unit comprising means to provide electric current and diagnose at least one of an electric short and an abrupt change in conductivity; and
attaching means for transmitting an indication regarding a status for said drainage point.

3. An information collection method comprising:
receiving on a moving vehicle, operational data transmitted from utility data points, wherein said vehicle is driving along a set route determined for purposes unrelated to data collection; and
providing access to said received data for further processing related to a function of a utility associated with said utility data point.

4. A data collection system implementable on a computing device, said system comprising:
a vehicle to drive along a set route, said route determined for purposes unrelated to data collection; and
a data receiver installed on said vehicle to receive operational data transmitted from utility data points while said vehicle is driven along said set route, wherein said vehicle is driving along a set route determined for purposes unrelated to data collection and operation of said data receiver is independent of an activity for which said route is determined.

5. The utility line drainage point of claim 1 and wherein:
said drainage pipe is from an original drainage point installation; and
said conducting rod, said source, said detector and said means are retrofitted components of said drainage point.

6. The utility line drainage point of claim 1 or 5 and wherein said means to indicate comprise at least a wireless transmitter.

7. The utility line drainage point of claim 1, 5 or 6 and wherein said status is at least one of "service required" and "functioning properly".

8. The utility line drainage point of any one of claims 1 and 5 to 7 and wherein said status is based on information provided by said electric short detector.

9. The utility line drainage point of any one of claims 1 and 5 to 8 and also comprising sensors for at least one of: pressure, gas contamination, and residue, wherein said means to indicate may also be configurable to transmit data from said sensors.

10. The utility line drainage point according to any one of claims 1 and 5 to 9 and wherein said utility line is a natural gas line.

11. The method according to claim 2 and also comprising a configuration option for said diagnostic unit to use said means for transmitting to transmit said indication when at least one of an electric short and abrupt change in conductivity is diagnosed.

12. The method according to claim 2 or 11 and wherein said means for transmitting comprise at least a wireless transmitter.

13. The method according to claim 2, 11 or 12 and also comprising configuring said means to periodically transmit a signal to indicate that they are functioning properly.

14. The method according to claim 3 and wherein said utility data points transmit said operational data regarding at least one of gas, electricity, water, telephone, sewage and wastewater.

15. The data collection system according to claim 4 and wherein said utility data points are associated with at least one of gas, electricity, water, telephone, sewage and wastewater.

16. The data collection system and method according to any one of claims 3, 4, 14 and 15 and wherein said route is a garbage collection route.
